# EUROPEAN PATENT APPLICATION

(11) **EP 4 306 456 A1**
(43) Date of publication of application: **17.01.2024**
(21) Application number: 22766385.3
(22) Date of filing: 11.03.2022
(51) Int. Cl.: B65G 29/00, B65G 47/84, B65G 47/22, B65G 37/00, B21D 51/38, B21D 43/14

(54) **DEVICE FOR REALIZING HIGH-SPEED STABLE NECK FORMING OF PULL-TOP CAN BY MULTIPLE RE-POSITIONING**

(30) Priority: 12.03.2021 CN 202110270893
(71) Applicant: Suzhou Slac Precision Equipment Co., Ltd, Suzhou, Jiangsu 215000 (CN)
(72) Inventor: AN, Xu, Suzhou, Jiangsu 215000 (CN); NIU, Yunhua, Suzhou, Jiangsu 215000 (CN); WANG, Yang, Suzhou, Jiangsu 215000 (CN)
(74) Representative: Betten & Resch
(86) International application number: PCT/CN2022/080362
(87) International publication number: WO 2022/188863

(57) **Abstract**

A kind of equipment for high-speed stable neck forming of cans through multiple repositioning, including a loading station and multiple sets of neck forming stations; The loading station includes a loading transfer turntable, with several vacuum adsorption grooves uniformly distributed on circumferential surface; A stable transition station is included, which is embedded between the loading station and neck forming station; The stable transition station includes a first stable turntable and a second stable turntable, both of which have several vacuum adsorption grooves uniformly distributed on circumferential surface; when the first stable turntable and the loading transfer turntable rotate to receive material, the can body enters the vacuum adsorption groove of the first stable turntable through the first calibration junction from the vacuum adsorption groove of the loading transfer turntable; when the first stable turntable and the second stable turntable rotate to receive material, the can body enters the vacuum adsorption groove of the second stable turntable through the second calibration junction from the vacuum adsorption groove of the first stable turntable. The present invention can be directly modularized on existing equipment and achieve high-speed production by ensuring the stability of the can when entering the neck forming mold.

## Description

### Field

The present invention relates to the field of processing equipment for cans, in particular to a kind of equipment for high-speed stable neck forming of cans through multiple repositioning.

### Background Art

With the development of social economy, the market has increasingly high requirements for production speed and stability of equipment in the manufacturing industry. The multi-stop neck forming equipment used in production process of cans in the metal packaging industry is now widely required in the market to achieve a production speed of 3000CPM+(CPM, i.e. can per minute), or even 3400CPM+. Therefore, stable high-speed production is the key to fierce market competition.

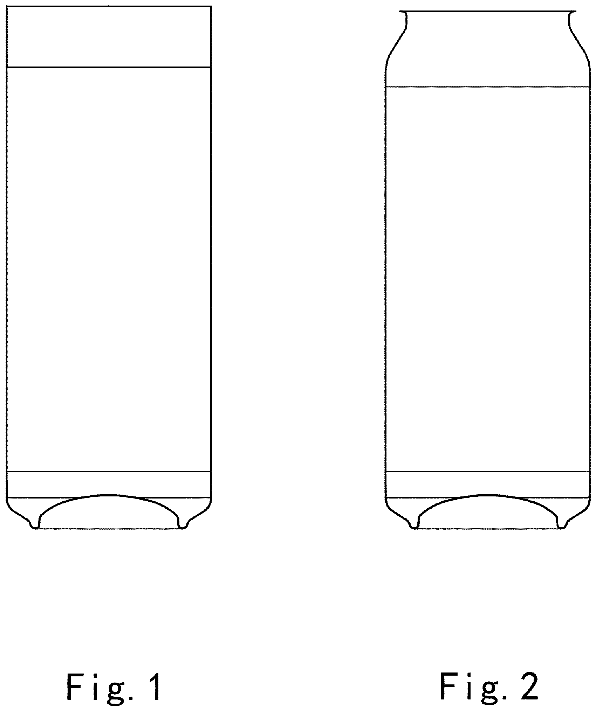

The production of cans requires multiple processes, including cupping, stretching, edge-cutting, color printing, internal spraying, and neck forming. Figure 1 shows a cut-edged can, and Figure 2 shows a can after neck forming. The stretching machine used in the stretching process and the internal spraying machine used in the internal spraying process can increase the production speed by increasing the number of configured equipment. However, the equipment used in the neck forming process has a high cost and covers a large area. Therefore, simply increasing the number to improve the production speed will lead to a significant increase in cost and occupy more land.

There are many types of cans available in the market today, and the can height of neck forming (including multiple forming steps, such as the scheme disclosed in US patent US 9308570) is also higher than before. Previously, the common can type in the previous market was 211/330ml, but now most of the cans are produced as 211/500ml, 211/550ml, 211/568ml.

On the premise of not changing the neck forming equipment, the stability requirements for processing can bodies with higher height are also increasing. However, in the actual production process, it was found that the height of cans is inversely proportional to stability of can entering. That is, the higher the can height, the poorer the stability of can entering, and the more likely it is to cause jamming. This is because: firstly, the faster the production speed, the shorter the time from feeding to neck forming. Therefore, the shorter the time left for can bodies to stabilize, which results in difficulty in stable and precise positioning of can body during processing, making it prone to shaking; secondly, an acceleration of production speed leads to an increase in rotational speed of feeding wheel, which in turn increases centrifugal force and inertia of can bodies. At the same time, combined with displacement of positioning and adsorption position caused by higher can body height, it may cause uneven force on can body, resulting in shaking during the process of can entering; thirdly, without changing the existing structure of neck forming equipment, a high can height will result in a smaller gap between can body and mold and push plate components in the equipment. Therefore, once can body shakes, it may randomly collide with end face of mold when entering neck forming station, causing problems such as can falling or jamming. Jamming may easily damage products, affect production speed, reduce yield rate, or even damage equipment and cause shutdown, seriously affecting continuity of production, causing both equipment and production losses to enterprise.

If neck forming equipment is changed to achieve high-speed production without jamming, adjustments need to be made to each station (usually 14 stations for neck forming equipment), which includes at least changing the path of cam in each station. Therefore, the workload involved is enormous, time-consuming, labor-intensive, and costly.

In summary, how to solve the contradiction between ultra-high speed production and can feeding stability without changing existing neck forming equipment has become the research topic to be solved by the present invention.

### Summary of the invention

The purpose of the present invention is to provide a kind of equipment for high-speed stable neck forming of cans through multiple repositioning.

To achieve the above objective, the technical solution adopted by the present invention is:
A kind of equipment for high-speed stable neck forming of cans through multiple repositioning, includes a loading station and multiple sets of neck forming stations from front to back according to processing sequence of can;
The loading station includes a loading transfer turntable, which is a star wheel with several vacuum adsorption grooves uniformly distributed on circumferential surface, and the vacuum adsorption grooves are in a circular arc shape, used for adsorbing and positioning can body of can;
At least one set of stable transition station is included, which is embedded between the loading station and neck forming station, and the loading station, the stable transition station and the neck forming station are sequentially connected from front to back;
The stable transition station includes a first stable turntable and a second stable turntable, both of which have rotation shafts parallel to the rotation shaft of loading transfer turntable; The first stable turntable and the second stable turntable are both star wheels, both of which have several vacuum adsorption grooves uniformly distributed on circumferential surface;
When the first stable turntable and the loading transfer turntable rotate to receive material, the two corresponding vacuum adsorption grooves on both sides are joint to form a first calibration junction, and the can body enters the vacuum adsorption groove of the first stable turntable through the first calibration junction from the vacuum adsorption groove of the loading transfer turntable;
When the first stable turntable and the second stable turntable rotate to receive material, the two corresponding vacuum adsorption grooves on both sides are joint to form a second calibration junction, and the can body enters the vacuum adsorption groove of the second stable turntable through the second calibration junction from the vacuum adsorption groove of the first stable turntable.

The relevant content in the above technical solution is explained as follows:
1. In the above solution, the loading station also includes a loading turntable, whose rotation shaft is parallel to the rotation shaft of the loading transfer turntable; The loading turntable is a star wheel, on circumferential surface of which several vacuum adsorption grooves uniformly distributed; When the loading turntable and the loading transfer turntable rotate to load, the two corresponding vacuum adsorption grooves on both sides are joint to form a circular junction, and the can body enters the vacuum adsorption groove of the loading transfer turntable through the junction from the vacuum adsorption groove of the loading turntable, stabilizing the position of can body.

Due to the fact that the structure of loading station may adopt existing technology and is not the invention point of this application, its principle and details will not be elaborated in this application.

2. In the above solution, the neck forming station includes a spindle assembly and a transfer assembly; the spindle assembly includes a forming spindle turntable, and the transfer assembly includes a forming transfer turntable;
The rotation shafts of forming spindle turntable and forming transfer turntable are parallel to the rotation shaft of second stable turntable; the forming spindle turntable and the forming transfer turntable are both star wheels; several positioning slots are evenly distributed on circumferential surface of forming spindle turntable, and the positioning slots are in a circular arc shape, used for positioning can body of can; several vacuum adsorption grooves are arranged on circular surface of forming transfer turntable;
When the second stable turntable and the forming spindle turntable rotate to receive material, the vacuum adsorption groove on the former and the positioning slot on the latter are joint to form a transfer position, and the can body enters the positioning slot of forming spindle turntable through the transfer position from the vacuum adsorption groove of second stable turntable;
when the forming spindle turntable and the forming transfer turntable rotate to receive material, the positioning slot on the former and the vacuum adsorption groove on the latter are joint to form a transfer position, and the can body enters the vacuum adsorption groove of forming transfer turntable through the transfer position from the positioning slot of forming spindle turntable;
The neck forming stations are connected before and after each other, and the neck forming of the can body is completed step by step, and the finished product is discharged in the last station.

**3.** In the above solution, the spindle assembly of neck forming station further includes multiple sets of mold components and multiple sets of push plate components;
The mold components and the pusher plate components are arranged one by one in correspondence, and the two are arranged on both sides of can body along a height direction of can body.
During processing, can body is pushed towards mold component by the execution component push plate in push plate component, and the neck of can body is formed through the execution component mold of the latter.

Due to the fact that the structure of neck forming station may adopt existing technology and is not the invention point of this application, its principle and details will not be elaborated in this application.

**4.** In the above solution, the stable transition station is equipped with multiple groups, each group of stable transition station is connected from front to back, and each group of stable transition station forms two calibration junctions. Based on this design, an appropriate number of stable transition stations can be added according to the requirements of the processing can height and processing speed, in order to ensure accurate position and stable transportation when can body enters the neck forming station.

**5.** In the above solution, the structure of second stable turntable may be the same as the structure of forming transfer turntable.

The working principle and advantages of the present invention are as follows:
The present invention relates to a kind of equipment for high-speed stable neck forming of cans through multiple repositioning, including a loading station and multiple sets of neck forming stations;
The loading station includes a loading transfer turntable, with several vacuum adsorption grooves uniformly distributed on circumferential surface;
A stable transition station is included, which is embedded between the loading station and neck forming station;
The stable transition station includes a first stable turntable and a second stable turntable, both of which have several vacuum adsorption grooves uniformly distributed on circumferential surface;
When the first stable turntable and the loading transfer turntable rotate to receive material, the two corresponding vacuum adsorption grooves on both sides are joint to form a first calibration junction, and the can body enters the vacuum adsorption groove of the first stable turntable through the first calibration junction from the vacuum adsorption groove of the loading transfer turntable; When the first stable turntable and the second stable turntable rotate to receive material, the two corresponding vacuum adsorption grooves on both sides are joint to form a second calibration junction, and the can body enters the vacuum adsorption groove of the second stable turntable through the second calibration junction from the vacuum adsorption groove of the first stable turntable.

Compared with the prior art, the invention adds two calibration junctions by embedding a stable transition station and adding two stable turntables; Every time the can body enters the calibration junction, it will undergo a stable calibration of its position, which increases the total stability time of can body and ultimately ensures that the position of can body is stable enough to avoid shaking when entering neck forming station. That is, stable and reliable processing of neck forming can be achieved through multiple repositioning of the can body, with high can height and high speed.

The transformation cost of the present invention is low, and only at least two stable turntables with a star wheel structure will achieve the renovation; And the difficulty of transformation is low. The modular design of the stable transition station can be directly embedded between the loading station and the neck forming station of the existing equipment to complete the transformation, which not only saves time and effort, but also has high accuracy after equipment assembly.

The present invention can ensure that the can stably enters the first station mold in the first group of neck forming station, ensuring concentricity requirements between can body and mold, thereby ensuring forming quality, liberating production speed limitation, and improving production efficiency.

In summary, the present invention can be directly modularized on existing equipment and achieve high-speed production by ensuring stability of can when entering the neck forming mold.

### Description of figures

Figure 1 shows a can after edge cutting;
Figure 2 is a can after neck forming;
Figure 3 is the structural schematic diagram one of the embodiment of the present invention (top view);
Figure 4 is the structural schematic diagram two of the embodiment of the present invention (front view);
Figure 5 is an enlarged view of point I in Figure 3;
Figure 6 is the structural schematic diagram one of prior art (top view);
Figure 7 is the structural schematic diagram two of prior art (front view).

In the above figures: 0. can body; 1. loading turntable; 2. loading transfer turntable; 3. vacuum adsorption groove; 4a. junction; 4b. first calibration junction; 4c. second calibration junction; 5. first stable turntable; 6. second stable turntable; 7. forming spindle turntable; 8. forming transfer turntable; 9. positioning slot; 10. transfer position; 11. push plate; 12. mold; A. loading station; B. stable transition station; C. neck forming station; d1. clearance; d2. clearance.

### Mode of carrying out the invention

The following is a further description of the present invention in conjunction with figures and embodiment.
Embodiment: The following will provide a clear explanation of the present application in terms of schematic and detailed descriptions. Those skilled in the art who understand the embodiment of the present application may modify it based on the techniques taught in the present application, which does not deviate from the spirit and scope of the present application.

The terms herein are intended only to describe specific embodiments and are not intended to be a limitation in this application Singular forms such as "a", "this", "the" and "that", as used here, also contain plural forms.

The words "first", "second" and so on used in this application are not intended to refer to order, nor to limit the application, but only to distinguish components or operations described in the same technical terms.

As for the "connection" or "positioning" used in this application, it may refer to two or more components or devices in direct physical contact with each other, or indirect physical contact with each other, and it may also refer to two or more components or devices in mutual operation or action.

The terms "including", "comprising", "having" and so on used in this application are all open terms, which means including but not limited to.

Unless otherwise specified, terms used in this application usually have the ordinary meaning of each word used in this field, in the content of this application and in the special content. Some terms used to describe this application will be discussed below or elsewhere in this specification to provide additional guidance for those skilled in the art on the description of this application.

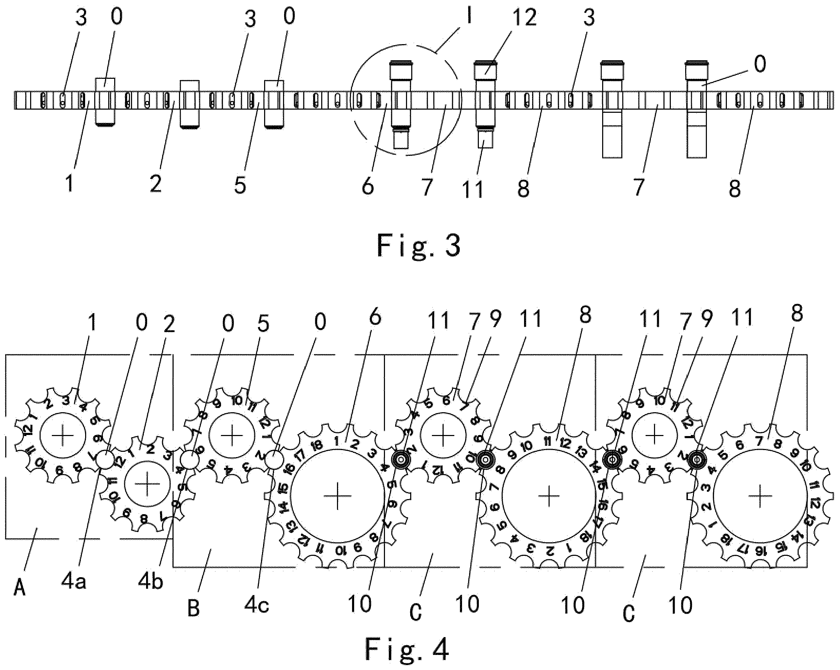

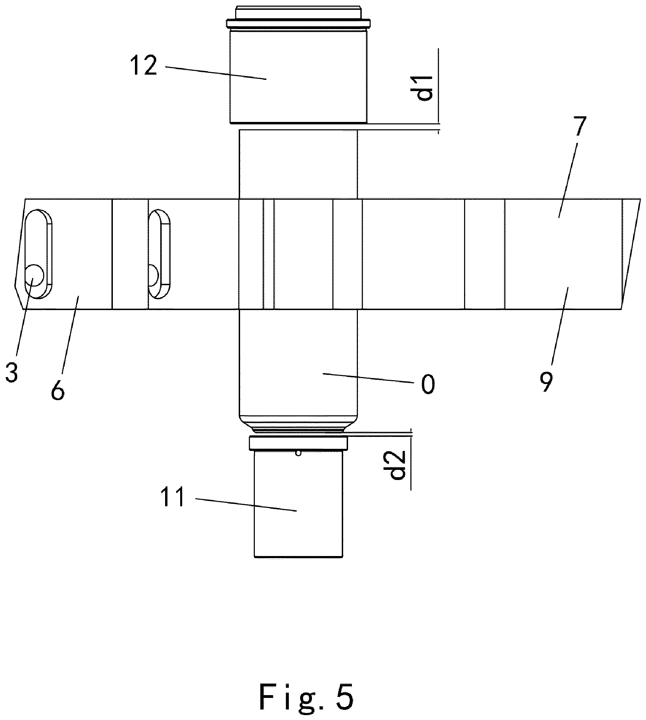

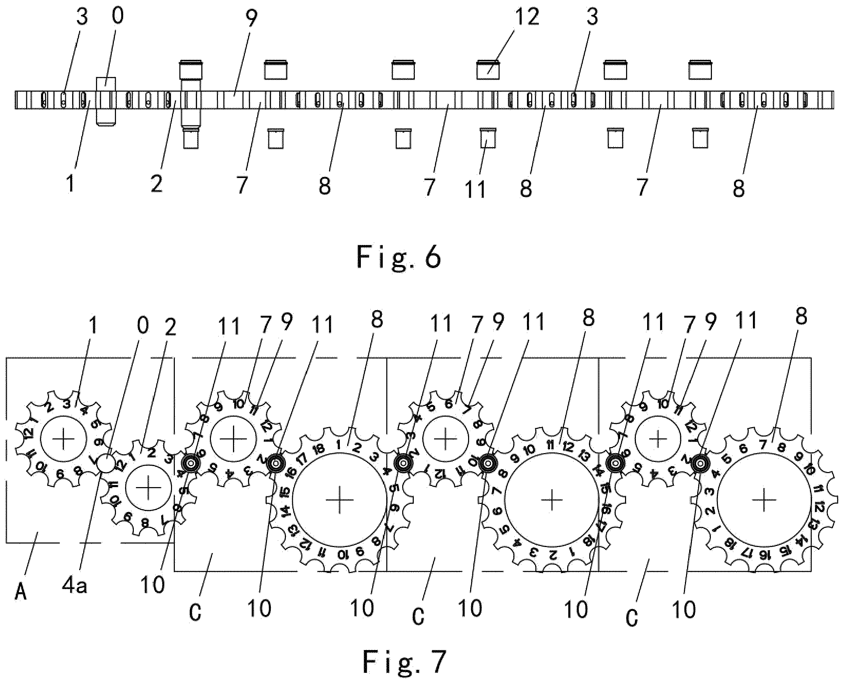

As shown in Figures 3-7, a kind of equipment for high-speed stable neck forming of cans through multiple repositioning, includes a loading station A and multiple sets of neck forming stations B from front to back according to processing sequence of can;
The loading station A includes a loading turntable 1 and a loading transfer turntable 2, and rotation shafts of both are parallel and both are star wheels. There are several vacuum adsorption grooves 3 evenly distributed on circumferential surfaces of both, and the vacuum adsorption grooves 3 are in a circular arc shape (preferably semicircular), used for adsorbing and positioning can body 0 of can; When the loading turntable 1 and the loading transfer turntable 2 rotate to load, the two corresponding vacuum adsorption grooves 3 on both sides are joint to form a circular junction 4a, and the can body 0 enters the vacuum adsorption groove 3 of the loading transfer turntable 2 through the junction 4a from the vacuum adsorption groove 3 of the loading turntable 1, completing the initial stabilization of can body 0 position.

The structure of the loading station A may adopt existing technology and is not the invention point of this application, so its principle and details will not be elaborated in this application.

At least one set of stable transition station B is included, which is embedded between the loading station A and neck forming station C, and the loading station A, the stable transition station B and the neck forming station C are sequentially connected from front to back.

The stable transition station B includes a first stable turntable 5 and a second stable turntable 6, both of which have rotation shafts parallel to the rotation shaft of loading transfer turntable 2; The first stable turntable 5 and the second stable turntable 6 are both star wheels, both of which have several vacuum adsorption grooves 3 uniformly distributed on circumferential surface;

When the first stable turntable 5 and the loading transfer turntable 2 rotate to receive material, the two corresponding vacuum adsorption grooves 3 on both sides are joint to form a circular first calibration junction 4b, and the can body 0 enters the vacuum adsorption groove 3 of the first stable turntable 2 through the first calibration junction 4b from the vacuum adsorption groove 3 of the loading transfer turntable 5, completing the initial calibration and stabilization of can body 0 position.

When the first stable turntable 5 and the second stable turntable 6 rotate to receive material, the two corresponding vacuum adsorption grooves 3 on both sides are joint to form a circular second calibration junction 4c, and the can body 0 enters the vacuum adsorption groove 3 of the second stable turntable 6 through the second calibration junction 4c from the vacuum adsorption groove 3 of the first stable turntable 5, completing the calibration and stabilization of can body 0 position again.

Among them, the junction 4a completes the initial stabilization of can body 0 position, the first calibration junction 4b completes the initial calibration stabilization of can body 0 position, and the second calibration junction 4c completes the calibration and stabilization of can body 0 position again. Furthermore, by adding two repositions of can body, the precise and stable position of can body 0 when entering neck forming station is achieved.

Preferably, the stable transition station B can be equipped with multiple groups, with each group of stable transition stations B connected from front to back, and each group of stable transition stations B forms two calibration junctions. Based on this design, an appropriate number of stable transition stations B may be added according to the requirements of the processing can height and processing speed, in order to ensure accurate position and stable transportation when can body 0 enters neck forming station C. In this way, even if the high height of can body 0 leads to a very small clearance d1 with mold 12 and a clearance d2 with push plate 11, there will still be no jamming situation.

The neck forming station C includes a spindle assembly and a transfer assembly; the spindle assembly includes a forming spindle turntable 7, and the transfer assembly includes a forming transfer turntable 8.

The rotation shafts of forming spindle turntable 7 and forming transfer turntable 8 are parallel to the rotation shaft of second stable turntable 6; the forming spindle turntable 7 and the forming transfer turntable 8 are both star wheels; several positioning slots 9 are evenly distributed on circumferential surface of forming spindle turntable 7, and the positioning slots 9 are in a circular arc shape (preferably semicircular), used for positioning can body 0 of can; several vacuum adsorption grooves 3 are arranged on circular surface of forming transfer turntable 8.

When the second stable turntable 6 and the forming spindle turntable 7 rotate to receive material, the vacuum adsorption groove 3 on the former and the positioning slot 9 on the latter are joint to form a transfer position 10, and the can body 0 enters the positioning slot 9 of forming spindle turntable 7 through the transfer position 10 from the vacuum adsorption groove 3 of second stable turntable 6.
when the forming spindle turntable 7 and the forming transfer turntable 8 rotate to receive material, the positioning slot 9 on the former and the vacuum adsorption groove 3 on the latter are joint to form a transfer position 10, and the can body 0 enters the vacuum adsorption groove 3 of forming transfer turntable 8 through the transfer position 10 from the positioning slot 9 of forming spindle turntable 7.

The spindle assembly of neck forming station C further includes multiple sets (usually 12 sets) of mold components and multiple sets (usually 12 sets) of push plate components; The mold components and the pusher plate components are arranged one by one in correspondence, and the two are arranged on both sides of can body 0 along a height direction of can body 0. During processing, the can body 0 is pushed towards the mold components by execution component push plate 11 in the push plate component, and the neck of the can body 0 is formed through the execution component mold 12 of the latter.

The neck forming stations C are connected back and forth to complete the neck forming of can body 0 step by step, and the finished product is discharged at the last station. Since the structure of neck forming station C may adopt the existing technology and is not the invention point of this application, the principle and details of this application will not be described in detail.

The structure of second stable turntable 6 may be the same as the structure of forming transfer turntable 8.

Compared with the prior art, the invention adds two calibration junctions by embedding a stable transition station and adding two stable turntables; Every time the can body enters the calibration junction, it will undergo a stable calibration of its position, which increases the total stability time of can body and ultimately ensures that the position of can body is stable enough to avoid shaking when entering neck forming station. That is, stable and reliable processing of neck forming can be achieved through multiple repositioning of the can body, with high can height and high speed.

The transformation cost of the present invention is low, and only at least two stable turntables with a star wheel structure will achieve the renovation; And the difficulty of transformation is low. The modular design of the stable transition station can be directly embedded between the loading station and the neck forming station of the existing equipment to complete the transformation, which not only saves time and effort, but also has high accuracy after equipment assembly.

The present invention can ensure that the can stably enters the first station mold in the first group of neck forming station, ensuring concentricity requirements between can body and mold, thereby ensuring forming quality, liberating production speed limitation, and improving production efficiency.

In summary, the present invention can be directly modularized on existing equipment and achieve high-speed production by ensuring stability of can when entering the neck forming mold.

The above embodiment is only for the purpose of explaining the technical concept and features of the invention, and its purpose is to enable those familiar with the technology to understand the content of the invention and implement it, and cannot limit the protection scope of the invention. Any equivalent change or modification made according to the spirit of the invention shall be covered by the protection scope of the invention.

## Claims

1. A kind of equipment for high-speed stable neck forming of cans through multiple repositioning, comprises a loading station and multiple sets of neck forming stations from front to back according to processing sequence of can;
The loading station comprises a loading transfer turntable, which is a star wheel with several vacuum adsorption grooves uniformly distributed on circumferential surface, and the vacuum adsorption grooves are in a circular arc shape, used for adsorbing and positioning can body of can;
Wherein: At least one set of stable transition station is included, which is embedded between the loading station and neck forming station, and the loading station, the stable transition station and the neck forming station are sequentially connected from front to back;
The stable transition station comprises a first stable turntable and a second stable turntable, both of which have rotation shafts parallel to the rotation shaft of loading transfer turntable; The first stable turntable and the second stable turntable are both star wheels, both of which have several vacuum adsorption grooves uniformly distributed on circumferential surface;
When the first stable turntable and the loading transfer turntable rotate to receive material, the two corresponding vacuum adsorption grooves on both sides are joint to form a first calibration junction, and the can body enters the vacuum adsorption groove of the first stable turntable through the first calibration junction from the vacuum adsorption groove of the loading transfer turntable;
When the first stable turntable and the second stable turntable rotate to receive material, the two corresponding vacuum adsorption grooves on both sides are joint to form a second calibration junction, and the can body enters the vacuum adsorption groove of the second stable turntable through the second calibration junction from the vacuum adsorption groove of the first stable turntable.

2. The equipment for high-speed neck forming according to claim 1, wherein: The loading station also comprises a loading turntable, whose rotation shaft is parallel to the rotation shaft of the loading transfer turntable; The loading turntable is a star wheel, on circumferential surface of which several vacuum adsorption grooves uniformly distributed;
When the loading turntable and the loading transfer turntable rotate to load, the two corresponding vacuum adsorption grooves on both sides are joint to form a circular junction, and the can body enters the vacuum adsorption groove of the loading transfer turntable through the junction from the vacuum adsorption groove of the loading turntable.

3. The equipment for high-speed neck forming according to claim 1, wherein: The neck forming station comprises a spindle assembly and a transfer assembly; the spindle assembly comprises a forming spindle turntable, and the transfer assembly comprises a forming transfer turntable;
The rotation shafts of forming spindle turntable and forming transfer turntable are parallel to the rotation shaft of second stable turntable; the forming spindle turntable and the forming transfer turntable are both star wheels; several positioning slots are evenly distributed on circumferential surface of forming spindle turntable, and the positioning slots are in a circular arc shape, used for positioning can body of can; several vacuum adsorption grooves are arranged on circular surface of forming transfer turntable;
When the second stable turntable and the forming spindle turntable rotate to receive material, the vacuum adsorption groove on the former and the positioning slot on the latter are joint to form a transfer position, and the can body enters the positioning slot of forming spindle turntable through the transfer position from the vacuum adsorption groove of second stable turntable;
when the forming spindle turntable and the forming transfer turntable rotate to receive material, the positioning slot on the former and the vacuum adsorption groove on the latter are joint to form a transfer position, and the can body enters the vacuum adsorption groove of forming transfer turntable through the transfer position from the positioning slot of forming spindle turntable.

4. The equipment for high-speed neck forming according to claim 3, wherein: the spindle assembly of neck forming station further comprises multiple sets of mold components and multiple sets of push plate components;
The mold components and the pusher plate components are arranged one by one in correspondence, and the two are arranged on both sides of can body along a height direction of can body.

5. The equipment for high-speed neck forming according to claim 1, wherein: The stable transition station is equipped with multiple groups, each group of stable transition station is connected from front to back, and each group of stable transition station forms two calibration junctions.

6. The equipment for high-speed neck forming according to claim 3, wherein: The structure of second stable turntable is the same as the structure of forming transfer turntable.
